Europäisches Patentamt

European Patent Office

Office européen des brevets

(19)

(11) Veröffentlichungsnummer: **0 016 989**
**B1**

(12) # EUROPÄISCHE PATENTSCHRIFT

(45) Veröffentlichungstag der Patentschrift:
**12.05.82**

(21) Anmeldenummer: **80101104.0**

(22) Anmeldetag: **05.03.80**

(51) Int. Cl.³: **C 08 J 3/02, C 08 L 33/08,**
**C 08 L 9/00**

(54) Dispersionen von vernetztem Kautschuk und Verfahren zu ihrer Herstellung.

(30) Priorität: **15.03.79 DE 2910154**

(43) Veröffentlichungstag der Anmeldung:
**15.10.80 Patentblatt 80/21**

(45) Bekanntmachung des Hinweises auf die Patenterteilung:
**12.05.82 Patentblatt 82/19**

(84) Benannte Vertragsstaaten:
**BE DE FR GB IT NL**

(56) Entgegenhaltungen:
**FR-A-2 158 410**
**GB-A-1 301 068**

(73) Patentinhaber: **BAYER AG, Zentralbereich Patente, Marken und Lizenzen, D-5090 Leverkusen 1, Bayerwerk (DE)**

(72) Erfinder: **Lindner, Christian, Dr., Riehler Strasse 200, D-5000 Köln 60 (DE)**
Erfinder: **Dr. Liebig, Lothar,, Walter-Flex-Strasse 19, D-5090 Leverkusen (DE)**
Erfinder: **Ott, Karl-Heinz. Dr., Paul-Klee-Strasse 54, D-5090 Leverkusen (DE)**

EP 0 016 989 B1

# 0 016 989

## Dispositionen von vernetztem Kautschuk und Verfahren zu ihrer Herstellung

Die Erfindung betrifft stabile, fließfähige Dispersionen von vernetzten, kautschukartigen Polymeren in organischen Flüssigkeiten und ein Verfahren zu ihrer Herstellung.

Wäßrige Dispersionen (Latices) von vernetzten und von unvernetzten Kautschukpolymeren sind bekannt, sie werden meist durch Emulsionspolymerisation erhalten. Für manche Anwendungen braucht man aber stabile Dispersionen von diskreten Mikrogelteilchen aus Kautschuk in organischen Flüssigkeiten. Solche stabilen organischen Kautschukdispersionen können nicht direkt durch radikalische Polymerisation entsprechender Monomerer in organischen Flüssigkeiten hergestellt werden, weil sich während der Polymerisation keine diskreten Kautschukteilchen, sogenannte Mikrogelpartikel, ausbilden, sondern ein kontinuierliches Kautschuknetzwerk, ein Makrogel.

Der Erfindung liegt die Erkenntnis zugrunde, daß man wäßrige Emulsionen von vernetzten, kautschukartigen Dien- oder Acrylesterpolymeren in bestimmten organischen Flüssigkeiten dispergieren kann, so daß die Dien- oder Acrylesterpolymere als gequollene Teilchen dispers verteilt sind, und das Wasser der ursprünglichen Emulsion ebenfalls in der organischen Flüssigkeit dispergiert vorliegt (Wasser-in-Öl-Emulsion). Das Wasser kann, falls erforderlich, entfernt werden, indem man die Wasser-in-Öl-Emulsion selektiv bricht, und dann das Wasser mechanisch, physikalisch oder chemisch abtrennt. Für die meisten Anwendungen der erfindungsgemäßen organischen Kautschukdispersionen ist es nicht erforderlich, das Wasser abzutrennen, es muß allerdings stabil dispergiert sein und darf sich nicht als getrennte Phase abscheiden.

Gegenstand der Erfindung sind stabile, fließfähige Dispersionen von Kautschuken in Form diskreter Teilchen eines mittleren Durchmessers von 100 bis 3000 nm in organischen Flüssigkeiten aus

A — 1 bis 20 Gew.-%, bezogen auf Gesamtdispersion, eines vernetzten Dienkautschuks oder eines vernetzten, kautschukartigen Homo- oder Copolymerisats von $C_1 - C_{10}$-Alkyl-acrylaten;

B — 0 bis 15 Gew.-%, bezogen auf Gesamtdispersion, Wasser in Form einer Wasser-in-Öl-Emulsion;

C — als kontinuierlicher organischer Phase einem Gemisch aus 95 bis 60 Gew.-% eines gesättigten aliphatischen $C_1 - C_{20}$- oder aromatischen $C_6 - C_{12}$-Kohlenwasserstoffes oder eines Halogenderivats davon und 5 bis 40 Gew.-% eines gesättigten $C_1 - C_{12}$-Alkanols, eines gesättigten Ketons mit bis zu 8 C-Atomen, eines Formamids oder eines gesättigten aliphatischen Nitrils mit bis zu 6 C-Atomen sowie einem Dispergator.

Ein weiterer Gegenstand der Erfindung ist ein Verfahren zur Herstellung der stabilen fließfähigen Kautschukdispersion, das dadurch gekennzeichnet ist, daß man eine wäßrige Emulsion des vernetzten Dienkautschuks oder des Alkylacrylatpolymerisats mit einem mittleren Kautschukteilchendurchmesser von 100 bis 800 nm (ermittelt durch Lichtstreuung) in einer organischen Flüssigkeit als Dispergiermittel, die besteht aus einem Gemisch aus 95 – 60 Gew.-% eines gesättigten aliphatischen $C_1 - C_{20}$- oder aromatischen $C_6 - C_{12}$-Kohlenwasserstoffs oder eines Halogenderivats davon und 5 – 40 Gew.-% eines gesättigten $C_1 - C_{12}$-Alkanols, eines gesättigten Ketons mit bis zu 8 C-Atomen, eines Formamids oder eines gesättigten aliphatischen Nitrils mit bis zu 6 C-Atomen, in Anwesenheit von 0,005 bis 4 Gew.-% eines Dispergators unter Agitation verteilt, und daß man unter weiterer Agitation ein Koaguliermittel für den Latex zufügt in einer zum Brechen des wäßrigen Latex ausreichenden Menge.

Die Dienkautschuke sind im allgemeinen stark vernetzt. Sie enthalten mindestens 50 Gew.-%, bevorzugt mehr als 70 Gew.-%, Gel. Die Kautschuke liegen im allgemeinen als durch Emulsionspolymerisation erhaltene wäßrige Kautschukdispersionen, als Latices, vor. Sie enthalten als Kautschuke bevorzugt Homopolymerisate von konjugierten Dienen mit 4 – 8 C-Atomen, wie Butadien, Isopren, Chloropren (Butadien ist besonders bevorzugt) oder deren Copolymerisate mit bis zu 40 Gew.-%, bevorzugt bis 10 Gew.-% einer Vinylverbindung, wie Acrylnitril, Methacrylnitril, Styrol, $\alpha$-Methylstyrol, Halogenstyrole, $C_1 - C_4$-Alkylstyrole, $C_1 - C_6$-Alkylacrylate und -methacrylate, Acryl-säure, Methacrylsäure, Vinylsulfonsäure, Allylsulfonsäure, Alkylenglykol-di-acrylate und -methacrylate, Divinylbenzol.

Die kautschukartigen Homo- oder Copolymerisate von $C_1 - C_{10}$-Alkylacrylaten enthalten mindestens 50 Gew.-%, bevorzugt mehr als 70 Gew.-%, Gel. Die Kautschuke liegen im allgemeinen als durch Emulsionspolymerisation erhaltene wäßrige Kautschukdispersionen, als Latices, vor. Sie enthalten als Kautschuke Homopolymerisate von $C_1 - C_{10}$-Alkylacrylaten, beispielsweise Homopolymerisate von Methylacrylat, Ethylacrylat, n-Butylacrylat oder Copolymerisate mit bis zu 40 Gew.-%, bevorzugt nicht mehr als 10 Gew.-%, Monovinylverbindungen, wie beispielsweise Acrylnitril, Methacrylnitril, Vinylbutylether, Vinylmethylether, Styrol, $\alpha$-Methylstyrol, Chlorstyrol, p-tert.-Butylstyrol, Methylstyrol, Acrylsäure, Methacrylsäure, Methyl-, Ethyl-, Propyl-, n-Butyl-, tert.-Butylacrylate und -methacrylate, Vinylsulfonsäure. Sie enthalten auch bis zu 8 Gew.-%, bevorzugt bis zu 4 Gew.-%, Divinyl- oder Polyvinylverbindungen oder Polyallylverbindungen und/oder n-Methylolacrylamid- (oder Methacrylamid-)Derivate, die dann als Vernetzer wirken. Beispiele sind Divinylbenzol, Ethylenglykol-,

2

Propylenglykol-, Polyalkylenoxidglykolacrylsäureester oder -methacrylsäureester, Triallylcyanurat, Methacrylsäurevinylester, N-Methylolacrylamide oder -methacrylamide, Butadien, Isopren. Bevorzugte Acrylatkautschuke sind vernetzte Poly-n-butylacrylate, die als vernetzende Monomere bis zu 5 Gew.-% 1,2-Butandioldiacrylat und/oder Butadien und/oder N-Methoxymethylacrylamid und/oder Triallylcyanurat enthalten.

Als Dispergiermittelgemische werden Mischungen aus 95−60 Gew.-% eines gesättigten aliphatischen und/oder aromatischen Kohlenwasserstoffs und/oder deren Halogenderivate aus der Reihe der $C_1−C_{20}$-Paraffine, $C_6−C_{12}$-Aromaten, wie z. B. Benzol, Toluol, Xylol, Halogenstyrol, Chlorbenzol, Anisol, Nitrobenzol, vorzugsweise Styrol, Pentan, Hexan, Heptan, c-Hexan, techn. Petrolethermischungen, Chlormethan, Methylenchlorid, Chloroform und 5−40 Gew.-% eines gesättigten $C_1−C_{12}$-Alkanols, wie z. B. Methanol, Ethanol, Butanol, Hexanol, tert.-Butanol, Cyclohexanol, Diethylenglykol, Ethylenglykol, Propylenglykol, Glyzerin, eines gesättigten aliphatischen Ketons mit bis zu 8 C-Atomen im Molekül, wie z. B. Aceton, Diethylketon, Methylethylketon, Cyclohexanon und/oder eines gesättigten, aliphatischen Nitrils mit bis zu 6 C-Atomen, wie z. B. Acetonitril, Propionitril oder eines Formamids, wie z. B. Dimethylformamid eingesetzt.

Bevorzugte Dispergiermischungen sind Mischungen aus 90 bis 83 Gew.-% Styrol und 10−27 Gew.-% $C_1−C_5$-Alkanolen, 90 bis 67 Gew.-% Styrol und 10−33 Gew.-% Aceton oder Methylethylketon, 80−72 Gew.-% Styrol und 20−28 Gew.-% Dimethylformamid oder 87−83 Gew.-% Styrol und 13−17 Gew.-% Acetonitril.

Zur Durchführung des Verfahrens zur Herstellung der Dispersionen suspendiert man einen Latex eines vernetzten Dien- oder Alkylacrylatpolymerisats in einem der oben angegebenen Dispergiermittel. Man setzt dazu dem Dispergiermittel 0,005 bis 4 Gew.-% eines Dispergators zu. An sich kann man alle bekannten und üblichen Dispergatoren verwenden, besonders bevorzugt sind aber Acrylsäureester oder Methacrylsäureester, langkettiger Monoalkohol, partielle Umsetzungsprodukte aus Maleinsäure/α-Olefincopolymerisaten und langkettigen Alkanolen, langkettige aliphatische Carbonsäuren, Harzsäuren, hochmolekulare Alkohole, Ester, Ether und/oder Polyolefine, z. B. lösliche Polybutadiene. Das Suspendieren der Latices in den organischen Flüssigkeiten erfordert starkes Rühren. Im allgemeinen kann man etwa 3 bis 50 Gew.-Teile Latex in 100 Gew.-Teilen organischer Flüssigkeit suspendieren. Da die Latices im allgemeinen 30 bis 60 Gew.-% Feststoff enthalten, bedeutet dies einen Kautschukgehalt von 1−20 Gew.-% in der organischen Dispersion.

Anschließend fügt man unter Rühren zu der Kautschukemulsions-Suspension in der organischen Flüssigkeit ein Koagulierungsmittel zu, in einer Menge, die ausreicht, die wäßrige Emulsion des Kautschuks zu brechen. Normalerweise arbeitet man dabei mit einer Menge eines Koagulierungsmittels, die ungefähr 2−20 Gew.-%, bezogen auf den Feststoffgehalt der zu dispergierenden wäßrigen Emulsion, ausmacht. Dabei bildet sich bei einer Temperatur von 0 bis 100°C, vorzugsweise bei 20−50°C, sofort oder nach spätestens 1 Stunde die erfindungsgemäße Dispersion aus, die neben dem dispergierten Kautschuk Wasser als Wasser-in-Öl-Emulsion enthält.

Dieses Wasser kann, falls erwünscht, abgetrennt werden, indem man entweder (durch Zufügen von Elektrolyten, wie Säuren oder Basen) die Wasser-in-Öl-Emulsion selektiv bricht und das Wasser als separate Phase abtrennt, oder indem man das Wasser sofort, ohne Koagulation, azeotrop abdestilliert. Die wasserhaltigen, erfindungsgemäßen Kautschukdispersionen sehen mehr oder weniger milchig aus, die wasserfreien sind opak. Ihre Eigenviskosität kann durch Säuren oder Basen verändert werden.

Die organischen Dispersionen sind praktisch unempfindlich gegen Elektrolyte, Säuren oder Basen; sie lassen sich mit großen Mengen bestimmter Lösungsmittel, z. B. aliphatischen Alkoholen, Ketonen (z. B. Aceton), Acetonitril, Dimethylformamid fällen.

Die erfindungsgemäßen Dispersionen lassen sich beispielsweise mit Hilfe von Radikalinitiatoren oder Redox-Initiatoren bei Raumtemperaturen von 0−150°C polymerisieren und aushärten. Wenn die Dispersionen zusätzlich noch Verstärkerfüllstoffe, Pigmente und so weiter enthalten, eignen sie sich zur Herstellung von schlagzähen Beschichtungen oder z. B. als Gießharze mit besonderen Eigenschaften, wie z. B. hoher Alterungsbeständigkeit.


## Beispiele

### Herstellung der wäßrigen Kautschukemulsionen

Die Herstellung von kautschukartigen (Co)Polymerisat-Latices mit Hilfe eines Emulsionspolymerisationsverfahrens ist bekannt.

Folgende Emulsionen werden für die Dispergierversuche eingesetzt (Tabelle 1):

Tabelle 1

| Beispiel | Art d. Kautschuks (ggf. Zusammensetzung) in Gew.-% | Kautschuk- gehalt**) d. Latex (Gew.-%) Gelgehalt (Gew.-%)***) | Latexteilchen- größe*) (nm) | pH-Wert |
|---|---|---|---|---|
| 1 | Polybutadien (BR) | $\frac{57}{88}$ | 490 | alkalisch |
| 2 | Polybutadien (BR) | $\frac{60}{91}$ | 160 | alkalisch |
| 3 | Polybutadien (BR) | $\frac{50}{87}$ | 830 | alkalisch |
| 4 | Acrylnitril/Butadien (NBR) | $\frac{49}{80}$ | 350 | neutral |
| 5 | Butadien/Styrol (SBR) | $\frac{50}{74}$ | 300 | alkalisch |
| 6 | 95% n-Butylacrylat 5% N-Methoxymethylmeth- acrylamid | $\frac{40}{85}$ | 120 | sauer |
| 7 | 90% n-Butylacrylat 9% Butadien 1% Vinylbutylether | $\frac{39}{79}$ | 150 | alkalisch |

*) gemessen mit Hilfe der Lichtstreuung; siehe dazu »Polymeranalytik«, M. Hoffmann u. a., Georg Thieme Verlag, Stuttgart (1977);
**) bezogen auf die gesamte Gewichtsmenge der Emulsion;
***) bezogen auf 100 Gew.-Teile des in Emulsion vorliegenden Kautschuks.

## Herstellung der erfindungsgemäßen Kautschukdispersionen

## Allgemeine Vorschrift

800 Gew.-Teile eines organischen Mediums werden mit X Gew.-Teilen eines Dispergators verrührt. Unter Rühren fügt man nun 200 Gew.-Teile der wäßrigen Kautschukemulsionen (Beispiele 1 – 7) hinzu. Anschließend gibt man in die Suspension Y Gew.-Teile eines Koagulierungsmittels und rührt Z Minuten bei Raumtemperatur, wobei sich die Kautschukdispersionen in organischen Medien ausbilden (Tabelle 2).

Tabelle 2

| Beispiel | Kautschuk-Emulsion | Art d. org.**) mediums (Gew.-%) | Art d. Koagulierungs-mittels in Y Gew.-Tln | Art d. Dispergators in X Gew.-Tln***) | Rührzeit in Z min. | Kautschuk-teilchengröße*) i. org. Medium (nm) |
|---|---|---|---|---|---|---|
| 6 | 1 | 86% Styrol 14% Isopropanol | 1 Essigsäure | 0,2 Disperg. A | 10 | 790 |
| 7 | 2 | 86% Styrol 14% Isopropanol | 1 Essigsäure | 0,2 Disperg. A | 10 | 220 |
| 8 | 3 | 86% Styrol 14% Isopropanol | 1 Essigsäure | 0,2 Disperg. A | 10 | 1400 |
| 9 | 4 | 86% Styrol 14% Isopropanol | 1 Essigsäure | 0,2 Disperg. A | 10 | 600 |
| 10 | 5 | 86% Styrol 14% Isopropanol | 1 Essigsäure | 0,2 Disperg. A | 10 | 500 |
| 11 | 1 | 80% Styrol 20% Aceton | 1 Essigsäure | 0,3 Disperg. B | 10 | 700 |
| 12 | 1 | 75% Styrol 25% Dimethylformamid | 1 Essigsäure | 0,3 Disperg. C | 10 | 700 |
| 13 | 1 | 85% Styrol 15% Acetonitril | 1 Essigsäure | 0,2 Disperg. A | 30 | 690 |

Fortsetzung

| Beispiel | Kautschuk-Emulsion | Art d. org.**) mediums (Gew.-%) | Art d. Koagulierungs-mittels in Y Gew.-Tln | Art d. Dispergators in X Gew.-Tln***) | Rührzeit in Z min. | Kautschuk-teilchengröße*) i. org. Medium (nm) |
|---|---|---|---|---|---|---|
| 14 | 1 | 80% Styrol 20% Cyclohexanon | 2 MgSO$_4$ | 0,2 Disperg. A | 30 | 660 |
| 15 | 1 | 78% Styrol 22% Diethylketon | 1 Essigsäure | 0,2 Disperg. A | 20 | 700 |
| 16 | 1 | 80% n-Hexan 20% Acetonitril | 2 MgSO$_4$ | 0,1 Disperg. A | 30 | 700 |
| 17 | 1 | 100% Essigsäure-n-butylester | 2 Essigsäure | 4,0 Disperg. A | 10 | 800 |
| 18 | 6 | 85% Styrol 14% Isopropanol | 2 MgSO$_4$ | 4,0 Disperg. A | 10 | 230 |
| 19 | 7 | 85% Styrol 14% Isopropanol | 2 MgSO$_4$ | 4,0 Disperg. A | 10 | 290 |
| 20 | 1 | 87,5% Methylenchlorid 12,5% Aceton | 1 Essigsäure | 0,3 Disperg. B | 10 | 785 |

*) bestimmt durch Lichtstreuungsmessungen bzw. Lichtmikroskopie.
**) %-Angaben bezogen auf 800 Gew.-Tle i. d. Allg. Vorschrift.
***) zur Erläuterung der Dispergatoren siehe Tabelle 3.

**0 016 989**

Tabelle 3

In Tabelle 2 eingesetzte Dispergatoren:

Typ

A = Umsetzungsprodukte von Maleinsäureanhydrid-1-Olefin-Copolymeren mit höheren Alkanolen (siehe dazu G. Sackmann u. a. »Angew. Malkromol. Chemie« 69 (1978), Nr. 1041, S. 141—156)

B = Polydecylmethacrylat

C = Disproportionierte Abietinsäure

## Patentansprüche

1. Stabile, fließfähige Dispersionen von Kautschuken in Form diskreter Teilchen eines mittleren Durchmessers von 100 bis 3000 nm in organischen Flüssigkeiten aus

A — 1 bis 20 Gew.-%, bezogen auf Gesamtdispersion, eines vernetzten Dienkautschuks oder eines vernetzten, kautschukartigen Homo- oder Copolymerisats von $C_1-C_{10}$-Alkyl-acrylaten;
B — 0 bis 15 Gew.-%, bezogen auf Gesamtdispersion, Wasser in Form einer Wasser-in-Öl-Emulsion;
C — als kontinuierlicher organischer Phase einem Gemisch aus 95 bis 60 Gew.-% eines gesättigten aliphatischen $C_1-C_{20}$- oder aromatischen $C_6-C_{12}$-Kohlenwasserstoffes oder eines Halogenderivates davon und 5 bis 40 Gew.-% eines gesättigten $C_1-C_{12}$-Alkanols, eines gesättigten Ketons mit bis zu 8 C-Atomen, eines Formamids oder eines gesättigten aliphatischen Nitrils mit bis zu 6 C-Atomen, sowie einem Dispergator.

2. Verfahren zur Herstellung der stabilen, fließfähigen Kautschukdispersion des Anspruchs 1, dadurch gekennzeichnet, daß man eine wäßrige Emulsion des vernetzten Dienkautschuks oder des Alkylacrylatpolymerisats mit einem mittleren Kautschukteilchendurchmesser von 100 bis 800 nm (ermittelt durch Lichtstreuung) in einer organischen Flüssigkeit als Dispergiermittel, die besteht aus einem Gemisch aus 95 bis 60 Gew.-% eines gesättigten aliphatischen $C_1-C_{20}$- oder aromatischen $C_6-C_{12}$-Kohlenwasserstoffes oder eines Halogenderivates davon und 5 bis 40 Gew.-% eines gesättigten $C_1-C_{12}$-Alkanols, eines gesättigten Ketons mit bis zu 8 C-Atomen, eines Formamids oder eines gesättigten aliphatischen Nitrils mit bis zu 6 C-Atomen in Anwesenheit von 0,005 bis 4 Gew.-% eines Dispergators unter Agitation verteilt, und daß man unter weiterer Agitation ein Koagulierungsmittel für den Latex zufügt in einer zum Brechen des wäßrigen Latex ausreichenden Menge.

## Claims

1. Stable, free-flowing dispersions of rubbers, in the form of discrete particles of an average diameter of 100 to 3000 nm, in organic liquids comprising

A — 1 to 20% by weight, based on the total dispersion, of a cross-linked diene rubber or a cross-linked, rubberlike homo- or co-polymer of $C_1-C_{10}$ alkyl acrylates;
B — 0 to 15% by weight, based on the total dispersion, of water in the form of a water-in-oil emulsion;
C — as the continuous organic phase, a mixture of 95 to 60% by weight of a saturated $C_1-C_{20}$ aliphatic or $C_6-C_{12}$ aromatic hydrocarbon or a halogen derivative thereof and 5 to 40% by weight of a saturated $C_1-C_{12}$ alkanol, a saturated ketone with up to 8 carbon atoms, a formamide or a saturated aliphatic nitrile with up to 6 carbon atoms, as well as a dispersant.

2. A process for producing the stable, free-flowing rubber dispersion according to Claim 1, characterised in that an aqueous emulsion of the cross-linked diene rubber or the alkyl acrylate polymer with an average rubber particle diameter of 100 to 800 nm (as determined by light scattering) is dispersed with stirring in an organic liquid as the dispersion medium, which consists of a mixture of 95 to 60% by weight of a saturated $C_1-C_{20}$ aliphatic or $C_6-C_{12}$ aromatic hydrocarbon or a halogen derivative thereof and 5 to 40% by weight of a saturated $C_1-C_{12}$ alkanol, a saturated ketone with up to

7

**0 016 989**

8 carbon atoms, a formamide or a saturated aliphatic nitrile with up to 6 carbon atoms, in the presence of 0.005 to 4% by weight of a dispersant, and in that a coagulant for the latex is added with continued stirring in a quantity sufficient to break the aqueous latex.

**Revendications**

1. Dispersions fluides et stables de caoutchoucs à l'état de particules séparées d'un diamètre moyen de 100 à 3000 nm dans des liquides organiques, consistant en

A — 1 à 20% en poids, par rapport à la dispersion totale, d'un caoutchouc diénique réticulé ou d'un homo- ou co-polymère du type caoutchouc, réticulé, d'acrylates d'alkyle en $C_1 - C_{10}$;

B — 0 à 15% en poids, par rapport à la dispersion totale, d'eau à l'état d'émulsion eau-dans-l'huile;

C — en tant que phase organique continue, un mélange de 95 à 60% en poids d'un hydrocarbure aliphatique saturé en $C_1 - C_{20}$ ou aromatique en $C_6 - C_{12}$ ou d'un dérivé halogéné d'un tel hydrocarbure et de 5 à 40% en poids d'un alcanol saturé en $C_1 - C_{12}$, d'une cétone saturée contenant jusqu'à 8 atomes de carbone, d'un formamide ou d'un nitrile aliphatique saturé contenant jusqu'à 6 atomes de carbone, et un agent dispersant.

2. Procédé de préparation des dispersions fluides et stables de caoutchouc de la revendication 1, caractérisé en ce que l'on disperse sous agitation une émulsion aqueuse du caoutchouc diénique réticulé ou du polymère d'acrylate d'alkyle réticulé, à un diamètre moyen des particules de caoutchouc de 100 à 800 nm (détermination par diffraction de la lumière) dans un liquide organique servant de milieu de dispersion et qui consiste en un mélange de 95 à 60% en poids d'un hydrocarbure aliphatique saturé en $C_1 - C_{20}$ ou aromatique en $C_6 - C_{12}$ ou d'un dérivé halogéné d'un tel hydrocarbure et 5 à 40% en poids d'un alcanol saturé en $C_1 - C_{12}$, d'une cétone saturée contenant jusqu'à 8 atomes de carbone, d'un formamide ou d'un nitrile aliphatique saturé contenant jusqu'à 6 atomes de carbone en présence de 0,005 à 4% en poids d'un agent dispersant, et en ce que l'on ajoute, en poursuivant l'agitation, un agent coagulant du latex en quantité suffisante pour briser le latex aqueux.